# EUROPÄISCHE PATENTSCHRIFT

(11) **EP 1 046 692 B1**
(45) Veröffentlichungstag und Bekanntmachung des Hinweises auf die Patenterteilung: **07.08.2002**
(21) Anmeldenummer: 00106099.5
(22) Anmeldetag: 30.03.2000
(51) Int. Cl.: C09K 19/00, C09K 19/38, C09D 5/36

(54) **Thermostabile Pigmente, Filme und Effektbeschichtungen sowie Mischungen zu deren Herstellung**
Thermostable pigments, films, effect coatings and mixtures for their preparation
Pigments thermostables, films, revêtements à effets et mélanges pour leur préparation

(30) Priorität: 15.04.1999 DE 19917067; 12.05.1999 DE 19922158
(43) Veröffentlichungstag der Anmeldung: 25.10.2000
(73) Patentinhaber: Consortium für elektrochemische Industrie GmbH, 81379 München (DE)
(72) Erfinder: Kasch, Michael, Dr., 84524 Neuötting (DE); Küpfer, Jürgen, Dr., 80686 München (DE); Kreuzer, Franz-Heinrich, Dr., 82152 Martinsried (DE)
(74) Vertreter: Potten, Holger

(56) Entgegenhaltungen:
- WO-A-97/30136
- DE-A- 19 538 700
- DE-A- 19 602 848

## Beschreibung

Die Erfindung betrifft thermostabile Pigmente, Filme und Effektbeschichtungen sowie Mischungen zu deren Herstellung.

Materialien mit flüssigkristalliner (Liquid-Crystal) Struktur mit chiraler Phase (LC-Materialien) sind bekannt. Die Herstellung solcher Materialien aus LC-Organosiloxanen ist beispielweise in US-A-5,211,877 beschrieben. Auch Pigmente enthaltend orientierte dreidimensional vernetzte Substanzen mit flüssigkristalliner Struktur mit chiraler Phase (LC-Pigmenten), ihre Herstellung und Verwendung sind beispielsweise aus DE 42 407 43 (entspricht US 5,362,315) bekannt.

Ein Problem bei der Verarbeitung von LC-Materialien beispielsweise in Lackierungen ist die je nach Applikationstemperatur unterschiedliche Farbe des Materials. Bei Verwendung von herkömmlichen LC-Materialien (beispielsweise erzeugt aus in US-A-5,211,877 genannten LC-Organosiloxanen oder den in DE-4240743 offenbarten LC-Pigmenten) in Lacksystemen ergeben sich bei Verarbeitungstemperaturen von 130°C (der bei der OEM-Lackierung von Fahrzeugkarosserien üblichen Verarbeitungstemperatur) andere Farben als bei einer Verarbeitung von 80°C (der bei Reparaturlackierungen üblichen Verarbeitungstemperatur).

Dieses unterschiedliche Verhalten des LC-Pigments wird in der Regel durch Quellung des Pigments bei der Herstellung von Lacken und dem Entquellvorgang beim Trocknen dieser Lacke bewirkt, d. h. durch das Einwirken von Lösungsmitteln auf das Pigment. Durch den Quellvorgang und das dabei gegebenenfalls stattfindende Herauslösen unvernetzter Bestandteile aus dem Pigment wird die Struktur des Pigments verändert. Das Erwärmen des getrockneten Lackfilms führt zu einer ausgeprägten Relaxation der Helix des cholesterischen Flüssigkristalls, d.h. die Ganghöhe der Helix wird verkürzt. Damit verändert sich die Reflexionsmittenwellenlänge, die sich direkt proportional zur Ganghöhe der Helix verhält. Die Farbe des Pigments verschiebt sich zu kürzeren Wellenlängen hin. Es tritt eine visuell deutlich wahrnehmbare Blauverschiebung ein. Je nach gewählter Verarbeitungstemperatur d. h. Einbrenntemperatur eines solche LC-Pigmente enthaltenden Lacks tritt eine unterschiedliche Relaxation der Helix in den Pigmenten auf. Daraus resultieren die unerwünschten, je nach Verarbeitungstemperatur unterschiedlichen Farbtöne.

EP-A-0887399 (entspricht der US-Anmeldung mit der Serial Number 09/090025) löst dieses Problem dadurch, daß vernetzbare LC-Organosiloxane als Pigmentmaterial gewählt werden, die nach der Vernetzung LC-Pigmente mit Glastemperaturen (Tg) von höchstens 80°C und geringen unvernetzten, extrahierbaren Anteilen ergeben. Damit ist bei jeder Temperatur oberhalb der Tg eine vollständige und einheitliche Relaxation der Helix erreicht, wodurch bei diesen Temperaturen immer dieselbe Farbe resultiert. Das Eigenschaftsprofil dieser Organosiloxane wird durch entsprechende Wahl von flexiblen Strukturelementen, sog. Spacern, in den LC-Monomeren die den Pigmenten zu Grunde liegen, erreicht. Zwar besitzen diese mit flexiblen Strukturelementen modifizierten Organosiloxane als LC-Pigmente im vernetzten Zustand im Verarbeitungsbereich 80°C - 130°C eine recht gute Thermostabilität, doch weisen sie unabhängig davon ein starke Quellung unterhalb des Verarbeitungsfensters (Verarbeitungsbereich 80°C - 130°C) auf, da durch die Spacer die Vernetzungsdichte relativ gering ist. LC-Pigmente aus Mischungen gemäß der EP-A-0887399 (entspricht der US-Anmeldung mit der Serial Number 09/090025) zeigen bei Raumtemperatur starke Wechselwirkungen mit in Lacken üblichlicherweise verwendeten Lösemitteln, die für eine starke Quellung der Pigmente und damit verbunden für eine visuell deutlich wahrnehmbare Rotverschiebung der Pigmentfarbe sorgen. Daneben bedingt die in der EP-A-0887399 offenbarte Modifizierung der Organosiloxane eine deutliche Kostensteigerung durch zusätzliche aufwendige Syntheseschritte.

EP 0 887 398 (entspricht der US-Anmeldung mit der Serial Number 09/100199) zeigt für bekannte LC-Pigmente die Möglichkeit auf, durch Wahl einer geeigneten Matrix ein System zu erhalten, bei dem bei unterschiedlichen Verarbeitungstemperaturen keine visuell wahrnehmbaren Farbunterschiede festgestellt werden können. Dieses System hat den Nachteil, daß der Anwender nicht frei in der Wahl seiner Matrix für die LC-Pigmente ist. Er unterliegt Einschränkungen bei der Wahl der Lackkomponenten (Bindemittel und Lösemittel).

EP 0 760 836 (entspricht US 5,807,497) offenbart Interferenzpigmente aus flüssigkristallinen Seitenketten-Polymeren aus niedermolekularen mono- oder difunktionellen Acrylaten, die sich durch höhere Farbbrillanz, höhere Vernetzungsdichte und bessere chemische Beständigkeit in üblichen Lacken sowie einfache Herstellung gegenüber bis dahin bekannten LC-Pigmenten auszeichnen. Auch diese LC-Pigmente besitzen im für Lackierungen relevanten Verarbeitungstemperaturbereich von etwa 80°C bis etwa 130°C eine nur unzureichende Thermostabilität, die sich in Verschiebungen der Reflexionsmittenwellenlängen von mehr als 2 nm äußert.

DE-A-19602848 offenbart ein Verfahren zur Herstellung von Pigmenten. Das für das Verfahren zu verwendende Material ist gekennzeichnet durch den Gehalt mindestens eines polymeren Bindemittels oder monomerer Verbindungen, die durch Polymerisation in ein polymeres Bindemittel überführt werden. Weitere Aufgabe von DE-A-19602848 ist es, Materialien bereitzustellen, die zu Pigmenten besonderer Brillanz führen. Diese Farbbrillanz wird dadurch erreicht, daß durch Zusatz eines polymeren Bindemittels und/oder eines Dispergierhilfsmittels zu den flüssigkristallinen Komponenten die Orientierung des flüssigkristallinen Materials verbessert wird. DE-A-19602848 befaßt sich nicht mit einer Erhöhung der Thermostabilität bei LC Materialien.

DE-A-19538700 offenbart Cholesterische Phasen bildende Polymere und Oligomere die als Molekülbausteine bestimmte Strukturen aufweisen. Das Material besitzt einen definierten Schmelzpunkt. Zwar wird bei den Polymeren, von "überragender Temperaturstabilität" gesprochen, doch diese Thermostabilität ist etwas anderes als die in vorliegender Anmeldung angesprochene Farbstabilität. DE-A-19538700 offenbart Polymere, die auch bei hohen Temperaturen noch beständig sind. DE-A-19538700 gibt keine Auskunft darüber, wie farbstabil die LC-Polymere in einem Temperaturintervall sind.

WO-A-97/30136 beschreibt cholesterisches Material mit mindestens zwei mesogenen (flüssigkristallinen) Verbindungen sowie ein Verfahren zu seiner Herstellung. Aussagen über die Thermostabilität des Materials finden sich nicht.

Eine Aufgabe der vorliegenden Erfindung ist es, eine Mischung aus vernetzbaren flüssigkristallinen Substanzen mit chiraler Phase (LC-Mischung) zur Verfügung zu stellen, die sich zur Herstellung thermostabiler Pigmente, Filme und Effektbeschichtungen eignet.

Im Sinne der Erfindung ist ein Gegenstand (z.B. ein Pigment, ein Film oder eine Effektbeschichtung) dann thermostabil, wenn er in einem Lack oder einer Kunststoffmatrix in einem Temperaturintervall von 80°C bis 130°C keine visuell wahrnehmbaren Farbunterschiede zeigt.

Ein Farbunterschied wird von Lackanwendern in der Regel dann als visuell nicht wahrnehmbar akzeptiert, wenn der Farbabstand ΔE* nach DIN 5033 und DIN 6174 von zwei bei den genannten Temperaturen hergestellten Lackproben ≤ 2 ist (L. Dulog, H. Schweiger, Farbe & Lack 1997, 30 - 44). Um dieses Ziel auch bei brillanten Pigmenten (Reflexion > 25%) im grünen Farbbereich, in dem das Auge für Farbunterschiede besonders empfindlich ist, zu erreichen, ist es erfahrungsgemäß erforderlich, daß sich die Reflexionsmittenwellenlängen um ≤ 2 nm unterscheiden, wenn die Lackproben bei 80°C bzw. 130°C hergestellt wurden.

Diese Aufgabe wird gelöst durch eine LC-Mischung enthaltend polymerisierbare Gruppen wobei mindestens 90% der polymerisierbaren Gruppen Bestandteil von Molekülen mit mindestens zwei polymerisierbaren Gruppen (Vernetzermolekülen) sind, dadurch gekennzeichnet, daß Verbindungen der allgemeinen Formel Y¹-A¹-M¹-A²-Y² , worin Y¹ und Y² gleich oder verschieden sind und polymerisierbare Gruppen wie beispielsweise Acrylatoder Methacrylatrest, Epoxidrest, Isocyanat-, Hydroxy-, Vinylether- oder Vinylesterrest bedeuten, und
A¹ und A² gleiche oder verschiedene Reste der allgemeinen Formel CₙH₂ₙ sind, in der n eine ganze Zahl von 0 bis 20 ist und eine oder mehrere Methylengruppen durch Sauerstoffatome ersetzt sein können, und
M¹ die allgemeine Formel -R¹-X¹-R²-X²-R³-X³-R⁴- besitzt, wobei R¹, R², R³ und R⁴ gleiche oder verschiedene zweibindige Reste ausgewählt aus der Gruppe -O-, -COO-, -CONH-, -CO-, -S-, -C≡C-, -CH=CH-, -N=N-, -N=N(O)- bedeuten und R²-X²-R³ oder R²-X² oder R²-X²-R³-X³ auch eine C-C-Bindung sein können und X¹, X², X³ gleiche oder verschiedene Reste sind ausgewählt aus der Gruppe der 1,4-Phenylene, 1,4-Cyclohexylene, der mit B¹ und/oder B² und/oder B³ substituierten Arylene oder Heteroarylene mit 6 bis 10 Atomen im Arylkern, die 1 bis 3 Heteroatome aus der Gruppe O, N und S enthalten, der mit B¹ und/oder B² und/oder B³ substituierten Cycloalkylene mit 3 bis 10 Kohlenstoffatomen, wobei B¹, B² und B³ gleiche oder verschiedene Substituenten ausgewählt aus der Gruppe -H, C₁-C₂₀-Alkyl, C₁-C₂₀-Alkoxy, C₁-C₂₀-Alkylthio, C₁-C₂₀-Alkylcarbonyl, C₁-C₂₀-Alkoxycarbonyl, C₁-C₂₀-Alkylthiocarbonyl, -OH, -F, -Cl, -Br, -I, -CN, -NO₂, Formyl, Acetyl und durch Ethersauerstoff, Thioetherschwefel oder Estergruppen unterbrochene Alkyl-, Alkoxy- oder Alkylthioreste mit 1 - 20 Kohlenstoffatomen sein können
mit chiralen Verbindungen der allgemeinen Formel V¹-A¹-W¹-Z-W²-A²-V²,
worin V¹ und V² gleich oder verschieden sind und einen Acrylat- oder Methacrylatrest, Epoxidrest, Vinylether- oder einen Vinylesterrest, Isocyanatrest, C₁-C₂₀-Alkyl, -C₁-C₂₀-Alkoxy, C₁-C₂₀-Alkylthio, C₁-C₂₀-Alkoxycarbonyl, C₁-C₂₀-Alkylthiocarbonyl, -OH, -F, -Cl, -Br, -I, -CN, -NO₂, Formyl, Acetyl und durch Ethersauerstoff, Thioetherschwefel oder Estergruppen unterbrochenen Alkyl-, Alkoxy- oder Alkylthioreste mit 1 - 20 Kohlenstoffatomen bedeutet, A¹ und A² die genannte Bedeutung haben und W¹ und W² die allgemeine Formel -R¹-X¹-R²-X²-R³- besitzen, wobei
R¹, R² und R³ die genannte Bedeutung haben und R² oder R²-X² auch eine C-C-Bindung sein kann und
X¹ und X² die genannte Bedeutung haben und
Z einen zweibindigen chiralen Rest aus der Gruppe der Dianhydrohexite, Hexosen, Pentosen, Binaphthylderivate, Biphenylderivate, Weinsäurederivate oder optisch aktiven Glykole bedeutet, gemischt werden,
wobei die Konzentration der polymerisierbaren Gruppen von denen sich mindestens 90% an Molekülen mit mindestens zwei polymerisierbaren Gruppen befinden, in der Gesamtmischung zwischen 3,2 und 15 mmol/g beträgt.

Vorzugsweise enthält die erfindungsgemäße LC-Mischung 70 bis 99 Gew.-% Verbindungen der wie oben definierten allgemeinen Formel Y¹-A¹-M¹-A²-Y² und 1 bis 30 Gew.-% Verbindungen der wie oben definierten allgemeinen Formel V¹-A¹-W¹-Z-W²-A²-V², wobei die Konzentration der polymerisierbarer Gruppen von denen sich mindestens 90% an Molekülen mit mindestens zwei polymerisierbaren Gruppen befinden, in der Gesamtmischung zwischen 3,2 und 15 mmol/g beträgt.

Besonders bevorzugt sind je nach Farbeinstellung Mischungen mit 90 - 95 Gew.-% der Verbindungen der allgemeinen Formel Y¹-A¹-M¹-A²-Y² und 5 - 10 Gew.-% der Verbindungen der allgemeinen Formel V¹-A¹-W¹-Z-W²-A²-V², wobei die Konzentration der polymerisierbarer Gruppen von denen sich mindestens 90% an Molekülen mit mindestens zwei polymerisierbaren Gruppen befinden, in der Gesamtmischung zwischen 3,2 und 15 mmol/g beträgt.

In einer besonders einfachen Ausführungsform handelt es sich bei der erfindungsgemäßen LC-Mischung um niedermolekulare nematische, vernetzbare unsubstituierte Hydrochinondibenzoat-Derivate mit einem gemittelten Molekulargewicht von 450 - 800, bevorzugt 460 -625 und/oder um Hydrochinonmonobenzoat-Derivate mit einem gemittelten Molekulargewicht von 200 - 400, bevorzugt 220 - 300 in Kombination mit einer chiralen Verbindung mit einem gemittelten Molekulargewicht zwischen 500 und 1000, vorzugsweise von 500 bis 700, wobei das gemittelte Molekulargewicht der Gesamtmischung 625 nicht übersteigt.

Die unsubstituierten Hydrochinondibenzoat-Derivate und Hydrochinonmonobenzoat-Derivate besitzen vorzugsweise selbst eine große flüssigkristalline Phasenbreite von 80°C bei einer Klärtemperatur (Tc) von vorzugsweise 150°C. Auch Mischungskomponenten mit nicht flüssigkristallinen Eigenschaften sollten die flüssigkristalline Phasenbreite der Gesamtmischung nicht unter 30°C reduzieren. Die Mischungen selbst können auch monotrop flüssigkristallin sein.

Eine weitere Aufgabe der vorliegenden Erfindung ist es, hochvernetzte thermostabile LC-Filme mit chiraler Phase und LC-Pigmente mit chiraler Phase bereitzustellen, die im bei der Verarbeitung üblichen Temperaturbereich von 80°C bis 130°C, in Lacksystemen und anderen polymeren Matrices wie z. B. Flüssigkunststoffen verarbeitet, Reflexionsmittenwellenlängenunterschiede ≤ 2 nm aufweisen und unterhalb dieses Verarbeitungstemperaturbereichs insbesondere auch bei Raumtemperatur eine im Vergleich zu bekannten LC-Pigmenten reduzierte Wechselwirkung mit Lösemitteln zeigen. Die reduzierte Wechselwirkung zeigt sich vorzugsweise in Form einer reduzierten Quellung und damit Rotverschiebung der Eigenfarbe.

Diese Aufgabe wird gelöst durch LC-Filme und LC-Pigmente bestehend aus vernetzten erfindungsgemäßen LC-Mischungen.

Um die erfindungsgemäßen LC-Filme und -Pigmente mit erhöhter Thermostabilität herzustellen sind bekannte niedermolekulare, difunktionelle Monomere mit hohen Molmassen ungeeignet. Solche beispielsweise in EP 0749466 oder in EP 0 760 836 offenbarten niedermolekularen mono- oder difunktionellen Monomere für chiral nematische Mischungen besitzen zwar überwiegend zwei polymerisierbare Einheiten, doch ist ihr Molekulargewicht im Verhältnis zur Anzahl polymerisierbarer Einheiten groß, so daß z. B. bei einem gemittelten Molekulargewicht der Einzelkomponenten von 650 und zwei polymerisierbaren Einheiten pro Molekül nur lediglich maximal 3,08 mmol polymerisierbare Einheiten pro Gramm Mischung resultieren. Nach Polymerisation solcher Mischungen liegt zwar eine annähernd vollständige Vernetzung vor, doch ist die Anzahl der Netzknotenpunkte pro Volumenelement, d. h. die Vernetzungsdichte, zu niedrig, um eine Lösemittelwechselwirkung des vernetzten Polymeren soweit zu unterbinden, daß Thermostabilität und eine damit einhergehende Farbkonstanz gewährleistet ist.

Erst eine erfindungsgemäße LC-Mischung ermöglicht die Herstellung von thermostabilen LC-Pigmenten, die in einem Verarbeitungstemperaturbereich von 80°C - 130°C in einer Matrix wie einem üblichen polymeren Bindemittel Reflexionsmittenwellenlängenunterschiede ≤ 2 nm besitzen.

Solche LC-Filme und LC-Pigmente lassen sich nach den im Stand der Technik bekannten Verfahren, wie sie u. a. in den bereits genannten Schriften beschrieben sind, aus einer erfindungsgemäßen LC-Mischung herstellen.

Ein Verfahren zur Herstellung eines erfindungsgemäßen LC-Films ist dadurch gekennzeichnet, daß eine erfindungsgemäße LC-Mischung in flüssigkristallinem Zustand auf einen glatten Untergrund aufgebracht und orientiert wird, durch Polymerisation der LC-Mischung dreidimensional vernetzt wird und von der Unterlage abgelöst wird.

Die erfindungsgemäße LC-Mischung wird vorzugsweise in einer Dicke von von 3 bis 15 µm, besonders bevorzugt 3 bis 6 µm auf die glatte Oberfläche aufgebracht.

Die Orientierung kann beispielsweise durch Scheren mittels einer Rakel oder Walze erfolgen.

Die Polymerisation des orientierten LC Materials kann in an sich bekannter Art und Weise, z.B. radikalisch unter Verwendung handelsüblicher thermischer Initiatoren, durch Elektronenstrahlen oder mit UV-Licht in Kombination mit handelsüblichen Photoinitiatoren oder aber durch Additionsoder Kondensationsreaktionen erfolgen.

Die Vernetzung der erfindungsgemäßen Mischungen im chiralen Strukturzustand erfolgt vorzugsweise mittels einer Polyreaktion, die je nach Art der polymerisierbaren, polykondensierbaren oder polyaddierbaren Gruppen als radikalische, ionische oder metallkatalysierte Polymerisation oder als Polykondensationsreaktion oder als Polyadditionsreaktion abläuft.

Die Initiierung der radikalischen Polymerisation kann thermisch mittels entsprechender Initiatoren oder durch UV-Strahlung unter Verwendung handelsüblicher Photoinitiatoren oder durch hochenergetische Strahlung wie Elektronenstrahlung erfolgen. Ein Vorteil thermischer Radikalpolymerisation oder Polymerisation via Elektronenstrahlhärtung besteht darin, daß der polymerisierbaren Mischung auch Lichtschutzmittel wie UV-Absorber (UVAs) oder Radikalfänger (HALS) zur Stabilisierung der resultierenden Pigmente oder Filme gegen UV-Licht z. B. für Außenanwendungen zugesetzt werden können, ohne dass es zu Einbußen des Polymerisationsumsatzes kommt, wie es bei der UV-Härtung wegen der Abschirmung des Photoinitiators durch einen UVA der Fall ist. Damit erfolgt keine Verringerung der Netzwerkdichte.

Wenn die Aushärtung der LC-Filme peroxidisch oder durch Elektronenstrahlung erfolgt, enthält die erfindungsgemäße LC-Mischung vorzugsweise handelsübliche Lichtschutzmittel wie UV-Absorber oder Radikalfänger in einer Gesamtkonzentration von 0.5 bis 5 Gew.-%.

Neben den Lichtstabilisatoren können die erfindungsgemäßen Mischungen weitere übliche Additive zur Oxidationsinhibierung, Polymerisationsinhibierung oder Additive zur Verbesserung rheologischer Eigenschaften enthalten. Darüber hinaus können auch absorbierende Füllstoffe wie Pigmente oder Ruß sowie Fluoreszenzfarbstoffe bzw. -pigmente enthalten sein.

Die. Erfindung betrifft ferner Verfahren zur Herstellung von erfindungsgemäßen LC-Pigmenten.

Ein solches Verfahren ist dadurch gekennzeichnet, daß ein erfindungsgemäßer LC-Film in plättchenförmige Partikel zerkleinert wird.

Vorzugsweise werden die LC-Filme zu plättchenförmigen Partikeln mit einem Durchmesser von 5 bis 100 µm, vorzugsweise 10 bis 50 µm zerkleinert.

Pigmente der genannten geometrischen Dimensionen sind bevorzugte Pigmente. Sie lassen sich über ein Korngrössenselektives Verfahren abtrennen.

Die erfindungsgemäßen LC-Pigmente oder -Filme eignen sich zur Einarbeitung in beliebige.Überzugsmittel zur Beschichtung von Gebrauchsgegenständen.

Insbesondere eignen sie sich zur Einarbeitung in Lacke für Fahrzeugkarosserien.

Die Erfindung betrifft somit auch Überzugsmittel, insbesondere Lacke enthaltend erfindungsgemäße LC-Pigmente oder LC-Filme.

Die Erfindung betrifft ferner mit erfindungsgemäßen Überzugsmitteln beschichtete Gebrauchsgegenstände, insbesondere Fahrzeugkarosserien.

Nachfolgend wird die Erfindung anhand von Beispielen weiter erläutert. Ein Vergleich der LC-Pigmente aus LC-Mischungen gemäß der Beispiele 6 bis 10 mit LC-Pigmenten aus LC-Mischungen nach den Vergleichsbeispielen 1, 2 und 3 zeigt, daß durch die erfindungsgemäßen LC-Mischungen thermostabile LC-Filme und LC-Pigmente mit Reflexionsmittenwellenlängendifferenzen ≤ 2 nm im gesammten Verarbeitungstemperaturbereich 80 bis 130°C erhalten werden. Wie aus Beispiel 11 ersichtlich, zeigen die erfindungsgemäßen Pigmente auch bei Raumtemperatur nur geringe Wechselwirkungen mit Lösemitteln.

### Beispiel 1:

a) Zu einer Lösung aus 249 g 4-Hydroxybenzoesäureethylester (1,5 mol), 3 g Kaliumiodid (0,018 mol) und 248 g Kaliumcarbonat (1,8 mol) in 2 l DMF wurde 276,6 g 4-Chlorbutylacetat (1,8 mol) gegeben und 11 h bei 90°C gerührt. Die Reaktionsmischung wurde auf 5 l Eiswasser gegeben, der ausgefallene Niederschlag abgesaugt und mit 4 l Eiswasser gewaschen. Das Rohprodukt wurde in 3 l Ethanol gelöst, mit Kaliumhydroxid (400 g) versetzt und 3 h unter Rückfluß erhitzt. Die Reaktionsmischung wurde auf 6 l Eiswasser gegeben, mit konzentrierter Salzsäure sauer eingestellt und der Niederschlag abfiltriert. Der Niederschlag wurde mit Wasser neutral gewaschen und anschließend getrocknet. Man erhielt 282,1 g 4-(4'-Hydroxybutoxy)-benzoesäure (Ausbeute 89%).
b) Eine Lösung aus 282 g 4-(4'-Hydroxybutoxy)-benzoesäure (1,34 mol), 230 ml frisch destillierter Acrylsäure (3,35 mol), 0,3 g 2,6-Di-tert.-butyl-4-(dimethylaminomethylen)phenol (Ethanox® 703) und 23,7 g p-Toluolsulfonsäure in 1,1 Liter 1,1,1-Trichlorethan wurde 10 h unter Rückfluß am Wasserabscheider erhitzt. Die Reaktionsmischung wurde auf 60°C - 70°C abgekühlt, in 2,5 l Petrolether eingerührt und der Niederschlag abfiltriert. Nach Waschen mit Petrolether wurde der Niederschlag bei Raumtemperatur im Vakuum 24 h getrocknet. Man erhält 223,7 g 4-(4'-Acryloxybutoxy)benzoesäure (Ausbeute 60%).

### Beispiel 2: Herstellung einer chiralen Verbindung (2-[4'-(4'-Acryloylbutyloxy)benzoyl]-5-anisoylisosorbid)

a) 902,6 g 2-Acetylisosorbid (4,8 mol), hergestellt nach EP 057 847, Beispiel 1, wurden in 1,7 l Xylol gelöst und mit einer Lösung von 900 g Anisoylchlorid (5,3 mol) in 200 ml Xylol versetzt. Die Mischung wurde 5 h unter Rückfluß erhitzt. Nach vollständigem Umsatz wurde auf Raumtemperatur abgekühlt, wobei das Produkt ausfiel. Der Kristallkuchen wurde abgesaugt und mit 600 ml Petrolether gewaschen und an der Luft getrocknet. Man erhielt 1278,8 g 2-Acetyl-5-anisoylisosorbid (Ausbeute 83%).
b) 639 g 2-Acetyl-5-anisoylisosorbid (1,98 mol) wurden in 2,5 l Methanol vorgelegt und mit 269 ml wässriger 25%-iger Ammoniaklösung (3,96 mol) versetzt. Die Lösung wurde 3 h bei 55°C gerührt. Das Lösemittel und der überschüssige Ammoniak wurden im Vakuum abgedampft und der Rückstand im Vakuum getrocknet. Die Umsetzung von 5-Anisoylisosorbid erfolgte ohne weitere Reinigung.
c) 232,35 g (0,83 mol) des so erhaltenen 5-Anisoylisosorbids, 230,0 g (0,87 mol) 4-(4'-Acryloylbutyloxy)benzoesäure (hergestellt nach Beispiel 1), 30 mg 2,6-Di-t-butyl-4(dimethylaminomethyl)phenol (Ethanox® 703, Ethyl Corp., Baton Rouge, LA 70801) und 5,5 g Dimethylaminopyridin wurden in 1 l Methylenchlorid gelöst und auf 6°C abgekühlt. Bei dieser Temperatur wurden 196,7 g (0,95 mol) DCC zugegeben, 1 h gerührt und anschließend auf Raumtemperatur erwärmt. Ausgefallener Dicyclohexylharnstoff wurde abfiltriert, das Lösemittel im Vakuum abgezogen und der Rückstand aus 1,5 l Isopropanol umkristallisiert. Das Kristallisat wurde nochmals mit 1 l Isopropanol gewaschen. Man erhielt 357 g 2-[4'-(4'-Acryloylbutyloxy)benzoyl]-5-anisoylisosorbid (Ausbeute 82%) mit einem Schmelzpunkt von 82°C.

### Beispiel 3: Herstellung einer chiralen Verbindung 2-[4-(Acryloyloxy)benzoyl]-5-(4-methoxybenzoyl)isosorbid

13.3 g 5-Anisoylisosorbid (47.5 mmol), erhältlich nach Beispiel 1b und 10.6 g Triethylamin (104.5 mmol) wurden in 70 ml Toluol gelöst. Bei 80 °C wurde eine Lösung von 10 g (47.5 mmol) 4-(Acryloyloxy)benzoylchlorid (hergestellt gemäß Lorkowski, H. J.; Reuther, *F. Acta Chim. Acad. Sci. Hung.* 1977, *95*, 423-34) in 10 ml Toluol zugetropft. Die Mischung wurde 2 h bei 80 °C gerührt, dann wurde bei Raumtemperatur mit 70 ml 1 N Salzsäure versetzt, die organische Phase mit Wasser (2 x 50 ml) und gesättigter Natriumhydrogencarbonat-Lösung (50 ml) gewaschen, über Natriumsulfat getrocknet und das Lösungsmittel im Vakuum entfernt. Der erhaltene Sirup wurde mit 75 ml Isopropanol gerührt. Nach Filtration wurde das 2-[4-(Acryloyloxy)benzoyl]-5-(4-methoxybenzoyl)isosorbid in einer Ausbeute von 11.7 g (54 % d. Th.) mit einem Schmp. von 111°C erhalten.

### Beispiel 4: Herstellung einer chiralen Verbindung Di-2,5-[4-(Acryloyloxy)benzoyl]isosorbid

20.0 g Isosorbid (137 mmol) und 73.2 g Triethylamin (723 mmol) wurden in 120 ml Toluol gelöst. Bei 80°C wurde eine Lösung von 60.5 g (287 mmol) 4-(Acryloyloxy)benzoylchlorid (hergestellt gemäß Lorkowski, H. J.; Reuther*, F. Acta Chim. Acad. Sci. Hung*. 1977, 95, 423-34) in 60 ml Toluol zugetropft. Die Mischung wurde 2 h bei 80°C gerührt, dann wurde bei Raumtemperatur mit 80 ml 10 %-iger Salzsäure versetzt, die organische Phase mit Wasser (2 x 80 ml) und 10 %-iger Natriumhydrogencarbonat-Lösung (80 ml) gewaschen, über Natriumsulfat getrocknet und das Lösungsmittel im Vakuum bis auf einen Toluolgehalt von etwa 20 Gew.-% entfernt. Der erhaltene Sirup wurde mit 220 ml Ethanol und 200 ml Cyclohexan versetzt und unter Rühren auf 80°C erwärmt. Nach Abkühlung und Filtration wurde das Di-2,5-[4-(Acryloyloxy) benzoyl] isosorbid in einer Ausbeute von 45.9 g (68% d. Th.) mit einem Schmp. von 115°C erhalten.

### Beispiel 5: Herstellung einer difunktionellen Komponente 4-(4-Acryloyloxybutoxy)benzoesäure-(4-acryloyloxyphenyl)ester

84,4 g (0,3 mol) 4-(4-Acryloyloxybutoxy)benzoesäurechlorid wurden in Toluol gelöst und die Lösung unter Rühren bei Raumtemperatur zu einem Gemisch aus 49,2 g (0.3 mol) Acrylsäure-(4-hydroxyphenyl)ester, 40,0 g Triethylamin (0,4 mol), 300 ml Toluol und 1 g 2,6-Di-tert-butyl-4-methylphenol innerhalb 45 min. zugetropft. Danach wurde für 30 min. auf 50 °C erhitzt, noch warm vom entstandenen Amin-Hydrochlorid abfiltriert und zum Filtrat 800 ml Petrolether eingerührt. Dabei fiel das Zielprodukt aus. Nach Abkühlung auf 5 °C wurde filtriert, das Produkt bei 40 °C in Essigsäureethylester aufgenommen und dreimal mit Wasser extrahiert. Die organische Phase wurde getrocknet, eingeengt und der Rückstand aus 200 ml Isopropanol umkristallisiert. Erhalten wurden 100 g an Zielprodukt (82 % Ausbeute). Der Schmelzbereich liegt zwischen 103 und 105 °C.

Der benötigte Acrylsäure-(4-hydroxyphenyl)ester kann durch selektive Monospaltung von Hydrochinon-bisacrylat mit Natriummethylat analog DE 44 42 831 (entspricht US 5,654,471) in 91 % Ausbeute erhalten werden. Das Monoacrylat ist bei Raumtemperatur flüssig. Die Säurekomponente zu obigem Ester, 4-(4-Acryloyloxybutoxy)benzoesäure, ist durch Umsetzung von Essigsäure-(4-chlorbutyl)ester mit 4-Hydroxybenzoesäuremethylester, Verseifung des erhaltenen alkylierten Methylesters zur freien 4-(4-Hydroxybutoxy)benzoesäure und Veresterung am Hydroxybutoxyrest mit Acrylsäure zugänglich. Diese Säure schmilzt bei 124 °C (Ausbeute 70 %) und kann durch übliche Umsetzung mit Thionylchlorid zum Säurechlorid umgewandelt werden.

### Beispiel 6: Grüne erfindungsgemäße Flüssigkristallmischung aus drei Komponenten

23,93 g Hydrochinon-bis-[4-(4-acryloylbutoxy)-benzoat] (hergestellt nach Broer, D. J.; Mol, G. N.; Challa, G. *Makromol. Chem.* 1991, *192*, 59), 6,6 g 4-(4-Acryloyloxybutoxy)benzoesäure-(4-acryloyloxyphenyl)ester nach Beispiel 5 und 2,81 g (2-[4'-(4'-Acryloylbutyloxy)benzoyl]-5-anisoylisosorbid) nach Beispiel 2 wurden zusammen mit 10 mg Triethylamin und 0,09 g 2,6-Di-tert.-butyl-4-(dimethylaminomethylen)-phenol (Ethanox® 703, Ethyl Corp., Baton Rouge, LA 70801) und 0.33 g Photoinitiator Irgacure® 819 (Ciba Spezialitätenchemie GmbH, Lampertsheim) eingewogen und in Toluol bei 70°C zu einer ca. 25prozentigen Lösung gelöst. Anschließend wurde über eine 1.5 cm dicke Schicht von Celite® (Fa. Manville Corp., Denver, USA) /Tonsil® (Südchemie AG, München) (95/5) filtriert. Im Hochvakuum wurde das Lösungsmittel entfernt (Restgehalt von < 0.1 Gew.-%). Die so erhaltene flüssigkristalline Mischung besitzt Klärtemperatur von cholesterisch zu isotrop von 125 °C . Die Viskosität liegt beträgt bei 90°C ca. 200 mPas. Die Konzentration polymerisierbarer Gruppen dieser Mischung liegt ohne Berücksichtigung des Photoinitiators bei 3.50 mmol/g. Ein daraus bei 93°C nach Beispiel 15 erzeugter LC-Film besitzt eine Reflexionsmittenwellenlänge von 543 nm.

### Beispiel 7: Rote erfindungsgemäße Flüssigkristallmischung aus drei Komponenten

Analog Beispiel 6 wurde aus 24.09 g Hydrochinon-bis-[4-(4-acryloylbutoxy)-benzoat] (hergestellt nach Broer, D. J.; Mol, G. N.; Challa, G. *Makromol. Chem.* 1991, *192*, 59), 6.6 g 4-(4-Acryloyloxybutoxy)benzoesäure-(4-acryloyloxyphenyl)ester nach Beispiel 5 und 2.32 g (2-[4'-(4'-Acryloylbutyloxy)benzoyl]-5-anisoylisosorbid) nach Beispiel 2 sowie 10 mg Triethylamin und 0,09 g 2,6-Di-tert.-butyl-4-(dimethylaminomethylen)-phenol (Ethanox® 703, Ethyl Corp., Baton Rouge, LA 70801) und 0.33 g Photoinitiator Irgacure® 819 eine rote flüssigkristalline Mischung hergestellt, die eine Klärtemperatur von cholesterisch zu isotrop von 130°C aufweist. Die Viskosität dieser Mischung beträgt ca. 108 mPas bei 90°C. Die Konzentration polymerisierbarer Gruppen dieser Mischung liegt ohne Berücksichtigung des Photoinitiators bei 3.52 mmol/g. Ein daraus bei 93°C nach Beispiel 15 erzeugter LC-Film besitzt eine Reflexionsmittenwellenlänge von 637 nm.

### Beispiel 8: Grüne erfindungsgemäße flüssigkristalline Mischung aus drei Komponenten

Analog Beispiel 6 wurde aus 15.84 g Hydrochinon-bis-[4-(4-acryloylbutoxy)-benzoat], erhältlich nach Broer, D. J.; Mol, G. N.; Challa, *G. Makromol. Chem. 1991, 192*, 59, 4.4 g 4-(Acryloyloxy)benzoesäure-(4-acryloyloxyphenyl)ester, erhältlich gemäß EP 0358074, Beispiel 1, und 1.76 g (2-[4'-(4'-Acryloylbutyloxy)benzoyl]-5-anisoylisosorbid) nach Beispiel 2 sowie 10 mg Triethylamin und 0,09 g 2,6-Di-tert.butyl-4-(dimethylaminomethylen)-phenol (Ethanox® 703, Ethyl Corp., Baton Rouge, LA 70801) und 0.22 g Photoinitiator Irgacure® 819 eine grüne flüssigkristalline Mischung hergestellt, die eine Klärtemperatur von cholesterisch zu isotrop von 140°C aufweist. Die Viskosität dieser Mischung beträgt ca. 112 mPas bei 90°C. Die Konzentration polymerisierbarer Gruppen dieser Mischung liegt ohne Berücksichtigung des Photoinitiators bei 3.78 mmol/g. Ein daraus bei 95°C nach Beispiel 15 erzeugter LC-Film besitzt eine Reflexionsmittenwellenlänge von 530 nm.

### Beispiel 9: Blaugrüne erfindungsgemäße flüssigkristalline Mischung aus zwei Komponenten

50,55g Hydrochinon-bis-[4-(4-acryloylbutoxy)-benzoat], erhältlich nach Broer, D. J.; Mol, G. N.; Challa, *G. Makromol. Chem*. 1991, *192*, 59, 0,55g Photoinitiator Irgacure® 819, 17 mg Triethylamin und 0,09 g 2,6-Di-tert.-butyl-4-(dimethylaminomethylen)-phenol (Ethanox® 703, Ethyl Corp., Baton Rouge, LA 70801) und 29,81g einer 14,93%igen toluolischen 2-[4-(Acryloyloxy)benzoyl]-5-(4-methoxybenzoyl)isosorbid-Lösung (erhältlich nach Beispiel 3) wurden eingewogen. Mittels KPG-Rührer wurde die Mischung bei 150°C Ölbadtemperatur homogenisiert bis eine klare Lösung entstand. Durch vorsichtiges Anlegen von Vakuum wird der kleine Anteil an Toluol abgezogen. Bei 1 mbar Vakuum wurde solange gerührt, bis die Mischung isotrop aufgeschmolzen war (ca. 10 Minuten).
Es wurde sofort abgekühlt bis die Substanztemperatur ca. 80 - 90 °C betrug. Die Mischung besitzt eine Klärtemperatur von cholesterisch zu isotrop von 142 °C sowie eine Viskosität von ca. 200 mPas bei 80 °C. Die Konzentration polymerisierbarer Gruppen dieser. Mischung liegt ohne Berücksichtigung des Photoinitiators bei 3.21 mmol/g. Ein daraus bei 95°C nach Beispiel 15 erzeugter LC-Film besitzt eine Reflexionsmittenwellenlänge von 515 nm.

### Beispiel 10: Blaugrüne erfindungsgemäße flüssigkristalline Mischung aus zwei Komponenten

92,3 g Hydrochinon-bis-[4- (4-acryloylbutoxy) -benzoat] (erhältlich nach Broer, D. J.; Mol, G. N.; Challa, G.
*Makromol. Chem.* 1991, *192*, 59), 7,7 g 2,5-Bis-[4-(acryloyloxy)benzoyl]-Isosorbid (erhältlich nach Beispiel 4), 1,00 g Photoinitiator Irgacure® 819 und 0,20 g 2,6-Di-tert.butyl-4-(dimethylaminomethylen)-phenol (Ethanox® 703, Ethyl Corp., Baton Rouge, LA 70801) wurden eingewogen. Mittels KPG-Rührer wurde die Mischung bei 150°C Ölbadtemperatur homogenisiert bis eine klare Lösung entstand.
Die Mischung besitzt einen Klärpunkt von 146°C und eine Viskosität von ca. 200 mPas bei 100°C. Die Konzentration polymerisierbarer Gruppen dieser Mischung liegt ohne Berücksichtigung des Photoinitiators bei 3.37 mmol/g. Ein daraus bei 100°C nach Beispiel 15 erzeugter LC-Film besitzt eine Reflexionswellenlänge von 476 nm.

### Vergleichsbeispiel 1: Grüne flüssigkristalline Mischung entsprechend DE 4240743 Beispiel 4 A

Es wurde eine grüne flüssigkristalline Mischung entsprechend Beispiel 4 A der DE 4240743 hergestellt. Diese flüssigkristalline Mischung enthält ohne Berücksichtigung des Photoinitiators 1.67 mmol/g polymerisierbarer Gruppen. Ein daraus bei 90° nach Beispiel 15 erzeugter LC-Film besitzt eine Reflexionsmittenwellenlänge von 516 nm.

### Vergleichsbeispiel 2: Grüne Flüssigkristallmischung entsprechend EP 0749466 (WO 95/24454)

Eine grüne flüssigkristalline Mischung wurde analog der allgemeinen Vorschrift zur Herstellung cholesterischer Mischungen der EP 0749466 aus je 11.25 Gew.-% der Komponenten K6, K7, K10 und K11 aus Bsp. 88, Mischung 36, und den Komponenten K1, K2, K4 und K5 aus Bsp. 92, Mischung 40, sowie 10 Gew.-% der chiralen Komponente K10 aus Bsp. 78, Mischung 26, unter Zusatz von 0.8 Gew.-% Photoinitiator Irgacure® 907 (Ciba Spezialitätenchemie GmbH, Lampertsheim) hergestellt. Die Mischung besitzt eine Klärtemperatur von cholesterisch zu isotrop von 92 °C und enthält ohne Berücksichtigung des Photoinitiators 3.04 mmol/g polymerisierbare Gruppen. Ein daraus bei 50°C nach Beispiel 15 hergestellter LC-Film besitzt eine Reflexionsmittenwellenlänge von 545 nm.

### Vergleichsbeispiel 3: Grüne Flüssigkristallmischung entsprechend EP 0760836

Es wurde eine grüne flüssigkristalline Mischung analog der allgemeinen Vorschrift zur Herstellung cholesterischer Mischungen der EP 0760836 aus 58 Gew.-% Di-[4-(6-acryloyloxy)-hexyloxy]-benzoesäure-1,4- (2-methyl) -phenyldiester als nematischer Komponente und 42 Gew.-% Cholesteryl-3,5-di-(4-acryloyloxybutoxy)-benzoat als chiraler Komponente hergestellt. Der Mischung wurden 1 Gew.-% des Photoinitiators Irgacure® 819 (Ciba Spezialitätenchemie GmbH, Lampertsheim) und 2000 ppm 2,6-Di-tert.-butyl-4-(dimethylaminomethylen)phenol (Ethanox® 703, Ethyl Corp., Baton Rouge, LA 70801) als Stabilisator zugesetzt. Die Mischung besitzt eine Klärtemperatur von cholesterisch zu isotrop von 61 °C. Sie enthält ohne Berücksichtigung des Photoinitiators 2,79 mmol/g polymerisierbarer Gruppen. Ein daraus bei 42 °C nach Beispiel 15 erzeugter LC-Film besitzt eine Reflexionsmittenwellenlänge von 522 nm.

### Beispiel 11: Wechselwirkung von Pigmenten mit Toluol bei Raumtemperatur

Der Boden einer 1 cm-Küvette wurde mit Pigmenten mit chiraler Struktur bedeckt, und die Küvette mit Toluol aufgefüllt. Nach einer Stunde wurden die Pigmente in der Küvette geschüttelt, woraufhin man die Pigmente wieder zu Boden sinken ließ. Mit einem Reflexionsaufsatz wurde die Reflexionsmittenwellenlänge der gequollenen Pigmente mit einem UV/VIS-Spektrometer, Modell Lambda 19 der Fa. Perkin-Elmer, bestimmt und mit der Reflexionsmittenwellenlänge, auf demselben Meßgerät vermessen, des entsprechenden LC-Films, aus dem das Pigment gewonnen worden war, verglichen.

| Pigmenttyp | Reflexionsmittenwellenlänge des zugehörigen Films [nm] | Reflexionsmittenwellenlänge des Pigments in Toluol/1h [nm] | Wellenlängendifferenz (Rotshift/Quellung) [nm] |
|---|---|---|---|
| LC-Pigment analog EP-A-0887399, Bsp. 15 B** | 540 | 710 | 170 |
| Erfindungsgemäßes Pigment nach Bsp.9 | 505 | 506 | 1 |

### Beispiel 12: Herstellung der farbgebenden LC-Filme

Die in den Beispielen 6 bis 10 und den Vergleichsbeispielen aufgeführten Monomermischungen aus vernetzba(rer)ren nematisch(er)n Komponente(n) und chiraler polymerisierbarer Komponente wurden gemäß der in US-A-5,362,315 (entspricht EP 0 686 674) beschriebenen Vorgehensweise durch Rakelauftrag auf einer PET-Trägerfolie in der cholesterischen Phase bei der jeweils im Beispiel genannten Temperatur zu 3 - 10 µm dicken Schichten orientiert und durch UV-Licht mit einer UV_{A}-Dosis von ca. 300 - 600 mJcm⁻² ausgehärtet. Dabei erhielt man LC-Filme der jeweils in den Beispielen angegeben Farbe bei orthogonaler Aufsicht. Unter von der Orthogonalen abweichenden Betrachtungswinkeln zeigten diese LC-Filme eine jeweils zu kürzeren Wellenlängen verschobene Farbe.

### Beispiel 13: Herstellung der LC-Pigmente

Der photovernetzte farbgebende LC-Film wurde von der Trägerfolie abgelöst, wobei LC-Rohschollen erhalten wurden. Diese Rohschollen wurden anschließend mit einer Luftstrahlmühle (Firma Retsch) zerkleinert. Das erhaltene Mahlgut wurde gesiebt und eine Siebfraktion mit einer mittleren Größe von etwa 30 µm für eine weitere Verarbeitung verwendet.

### Beispiel 14: Herstellung eines erfindungsgemäßen Lackes

Die gemäß Beispiel 13 erhaltenen LC-Pigmente wurden mit einem Klarlack im Verhältnis 1 : 9 Gewichtsteilen gemischt. Als Klarlack wurde ein Zweikomponenten-Decklack "Standox" der Firma Herberts, dem der Härter erst kurz vor der Verarbeitung zugesetzt wurde, oder ein konventionelles Acrylat-Melaminharz-Bindemittelsystem der Firma Herberts für die Kraftfahrzeugreparaturlackierung verwendet. Die Viskosität wurde mit einem Verdünner auf eine Auslaufzeit von 80 sec. aus einem DIN-4-Auslaufbecher eingestellt.

### Beispiel 15: Thermostabile LC-Effektlackierungen eines Glanzkartons

Die Mischung aus Pigment und Bindemittel gemäß Bsp. 14 wurde über Nacht stehen gelassen und mit einem Filmziehgerät (Fa. Erichsen, D-58675 Hemer) auf schwarzen Glanzkarton aufgetragen, wobei die Spalthöhe 180 µm und die Ziehgeschwindigkeit 10 mm/sec betrugen. Nach einer Ablüftzeit von 10 min. bei Raumtemperatur wurden die Proben 1 h bei 80 °C bzw. 1 h bei 130 °C getempert. Die Reflexionsspektren der bei den unterschiedlichen Temperaturen eingebrannten Lackmuster wurden mit einem Farbmeßgerät CM 508/d der Fa. Minolta (D-22923 Ahrensburg) bestimmt. Als Vergleichsmaterial wurden Pigmente aus LC-Mischungen nach den Vergleichsbeispielen 1 bis 3 hergestellt und entsprechend appliziert sowie bewertet (Konzentration polymerisierbarer Gruppen < 3.2 mmol/g).

| Pigmente aus Beispielsmischung | Polymerisierbare Gruppen [mmol/g] | Reflexionswellenlänge [nm] | Reflexionswellenlängendifferenz (nm) [(1 h/80°C)/(1 h/130°C)] |
|---|---|---|---|
| B 6 | 3.50 | 543 | 1 |
| B 7 | 3.52 | 637 | 1 |
| B 8 | 3.78 | 530 | 2 |
| B 9 | 3.21 | 515 | <1 |
| B 10 | 3.37 | 476 | <1 |
| V 1 | 1.67 | 516 | 11 |
| V 2 | 3.04 | 545 | 3 |
| V 3 | 2.79 | 522 | 4 |

## Patentansprüche

1. Mischung aus vernetzbaren flüssigkristallinen Substanzen mit chiraler Phase (LC-Mischung), enthaltend polymerisierbare Gruppen, wobei mindestens 90% der polymerisierbaren Gruppen Bestandteil von Molekülen mit mindestens zwei polymerisierbaren Gruppen (Vernetzermolekülen) sind, **dadurch gekennzeichnet, daß** Verbindungen der allgemeinen Formel Y¹-A¹-M¹-A²-Y², worin
Y¹ und Y² gleich oder verschieden sind und polymerisierbare Gruppen wie beispielsweise Acrylat- oder Methacrylatrest, Epoxidrest, Isocyanat-, Hydroxy-, Vinylether- oder Vinylesterrest bedeuten, und
A¹ und A² gleiche oder verschiedene Reste der allgemeinen Formel CₙH₂ₙ sind, in der n eine ganze Zahl von 0 bis 20 ist und eine oder mehrere Methylengruppen durch Sauerstoffatome ersetzt sein können, und
M¹ die allgemeine Formel -R¹-X¹-R²-X²-R³-X³-R⁴- besitzt, wobei R¹, R², R³ und R⁴ gleiche oder verschiedene zweibindige Reste ausgewählt aus der Gruppe -O-, -COO-, -CONH-, -CO-, -S-, -C≡C-, -CH=CH-, -N=N-, -N=N(O)- bedeuten und R²-X²-R³ oder R²-X² oder R²-X²-R³-X³ auch eine C-C-Bindung sein können und X¹, X², X³ gleiche oder verschiedene Reste sind ausgewählt aus der Gruppe der 1,4-Phenylene, 1,4-Cyclohexylene, der mit B¹ und/oder B² und/oder B³ substituierten Arylene oder Heteroarylene mit 6 bis 10 Atomen im Arylkern, die 1 bis 3 Heteroatome aus der Gruppe O, N und S enthalten, der mit B¹ und/oder B² und/oder B³ substituierten Cycloalkylene mit 3 bis 10 Kohlenstoffatomen, wobei B¹, B² und B³ gleiche oder verschiedene Substituenten ausgewählt aus der Gruppe -H, C₁-C₂₀-Alkyl, C₁-C₂₀-Alkoxy, C₁-C₂₀-Alkylthio, C₁-C₂₀-Alkylcarbonyl, C₁-C₂₀-Alkoxycarbonyl, C₁-C₂₀-Alkylthiocarbonyl, -OH, -F, -Cl, -Br, -I, -CN, -NO₂, Formyl, Acetyl und durch Ethersauerstoff, Thioetherschwefel oder Estergruppen unterbrochene Alkyl-, Alkoxy- oder Alkylthioreste mit 1 - 20 Kohlenstoffatomen sein können
mit chiralen Verbindungen der allgemeinen Formel V¹-A¹-W¹-Z-W²-A²-V², worin
V¹ und V² gleich oder verschieden sind und einen Acrylatoder Methacrylatrest, Epoxidrest, Vinylether- oder einen Vinylesterrest, Isocyanatrest, C₁-C₂₀-Alkyl, C₁-C₂₀-Alkoxy, C₁-C₂₀-Alkylthio, C₁-C₂₀-Alkoxycarbonyl, C₁-C₂₀-Alkylthiocarbonyl, -OH, -F, -Cl, -Br, -I, -CN, -NO₂, Formyl, Acetyl und durch Ethersauerstoff, Thioetherschwefel oder Estergruppen unterbrochenen Alkyl-, Alkoxy- oder Alkylthioreste mit 1 - 20 Kohlenstoffatomen bedeutet,
A¹ und A² die genannte Bedeutung haben und
W¹ und W² die allgemeine Formel -R¹-X¹-R²-X²-R³- besitzen, wobei
R¹, R² und R³ die genannte Bedeutung haben und R² oder R²-X² auch eine C-C-Bindung sein kann und
X¹ und X² die genannte Bedeutung haben und
Z einen zweibindigen chiralen Rest aus der Gruppe der Dianhydrohexite, Hexosen, Pentosen, Binaphthylderivate, Biphenylderivate, Weinsäurederivate oder optisch aktiven Glykole bedeutet, gemischt werden,
wobei die Konzentration der polymerisierbaren Gruppen von denen sich mindestens 90% an Molekülen mit mindestens zwei polymerisierbaren Gruppen befinden, in der Gesamtmischung zwischen 3,2 und 15 mmol/g beträgt.

2. Mischung nach Anspruch 1, **dadurch gekennzeichnet, daß** sie 70 bis 99 Gew.-% Verbindungen der allgemeinen Formel Y¹-A¹-M¹-A²-Y² und 1 bis 30 Gew.-% Verbindungen der allgemeinen Formel V¹-A¹-W¹-Z-W²-A²-V² enthält.

3. LC-Filme oder LC-Pigmente bestehend aus vernetzten erfindungsgemäßen LC-Mischungen gemäß einem der Ansprüche 1 bis 2.

4. Verfahren zur Herstellung eines LC-Films gemäß Anspruch 3, **dadurch gekennzeichnet, daß** eine LC-Mischung gemäß einem der Ansprüche 1 oder 2 in flüssigkristallinem Zustand auf einen glatte Untergrund aufgebracht und orientiert wird, durch Polymerisation der LC-Mischung dreidimensional vernetzt wird und von der Unterlage abgelöst wird.

5. Verfahren zur Herstellung von LC-Pigmenten gemäß Anspruch 3, **dadurch gekennzeichnet, daß** ein LC-Film gemäß Anspruch 3 in plättchenförmige Partikel zerkleinert wird.

6. Überzugsmittel, enthaltend LC-Pigmente oder LC-Filme gemäß Anspruch 3.

## Claims

1. Mixture of crosslinkable liquid-crystalline substances having a chiral phase (LC mixture), containing polymerizable groups, where at least 90% of the polymerizable groups are part of molecules containing at least two polymerizable groups (crosslinker molecules), **characterized in that**
compounds of the general formula Y¹-A¹-M¹-A²-Y², in which Y¹ and Y² are identical or different and are polymerizable groups, such as, for example, acrylate, methacrylate, epoxide, isocyanate, hydroxyl, vinyl ether or vinyl ester radicals, and A¹ and A² are identical or different radicals of the general formula CₙH₂ₙ, in which n is an integer from 0 to 20, and one or more methylene groups may be replaced by oxygen atoms, and
M¹ has the general formula -R¹-X¹-R²-X²-R³-X³-R⁴-, where R¹, R², R³ and R⁴ are identical or different divalent radicals selected from the group consisting of -O-, -COO-, -CONH-, -CO-, -S-, -C≡C-, -CH=CH-, -N=N- and -N=N(O)-, and R²-X²-R³ or R²-X² or R²-X²-R³-X³ can also be a C-C bond, and X¹, X² and X³ are identical or different radicals selected from the group consisting of 1,4-phenylenes, 1,4-cyclohexylenes, arylenes or heteroarylenes having 6 to 10 atoms in the aryl ring which contain 1 to 3 heteroatoms from the group consisting of O, N and S and which are substituted by B¹ and/or B² and/or B³, cycloalkylenes having 3 to 10 carbon atoms which are substituted by B¹ and/or B² and/or B³, where B¹, B² and B³ can be identical or different substituents selected from the group consisting of -H, C₁-C₂₀-alkyl, C₁-C₂₀-alkoxy, C₁-C₂₀-alkylthio, C₁-C₂₀-alkylcarbonyl, C₁-C₂₀-alkoxycarbonyl, C₁-C₂₀-alkylthiocarbonyl, -OH, -F, -Cl, -Br, -I, -CN, -NO₂, formyl, acetyl, and alkyl, alkoxy or alkylthio radicals having 1 - 20 carbon atoms which are interrupted by ether oxygen, thioether sulphur or ester groups,
are mixed with chiral compounds of the general formula V¹-A¹-W¹-Z-W²-A²-V²,
in which V¹ and V² are identical or different and are an acrylate, methacrylate, epoxide, vinyl ether or vinyl ester radical, an isocyanate radical, C₁-C₂₀-alkyl, C₁-C₂₀-alkoxy, C₁-C₂₀-alkylthio, C₁-C₂₀-alkoxycarbonyl, C₁-C₂₀-alkylthiocarbonyl, -OH, -F, -Cl, -Br, -I, -CN, -NO₂, formyl, acetyl, and alkyl, alkoxy or alkylthio radicals having 1 - 20 carbon atoms which are interrupted by ether oxygen, thioether sulphur or ester groups,
A¹ and A² are as defined above, and
W¹ and W² have the general formula -R¹-X¹-R²-X²-R³-,
where
R¹, R² and R³ are as defined above and R² or R²-X² may alternatively be a C-C bond, and
X¹ and X² are as defined above, and
Z is a divalent chiral radical from the group consisting of dianhydrohexitols, hexoses, pentoses, binaphthyl derivatives, biphenyl derivatives, tartaric acid derivatives and optically active glycols,
where the concentration of the polymerizable groups of which at least 90% are on molecules containing at least two polymerizable groups in the mixture as a whole is from 3.2 to 15 mmol/g.

2. Mixture according to Claim 1, charcterized in that it comprises from 70 to 99% by weight of compounds of the general formula Y¹-A¹-M¹-A²-Y² and from 1 to 30% by weight of compounds of the general formula V¹-A¹-W¹-Z-W²-A²-V².

3. LC films or LC pigments consisting of crosslinked LC mixtures according to either of Claims 1 and 2.

4. Process for the production of an LC film according to Claim 3, **characterized in that** an LC mixture according to either of Claims 1 and 2 is applied in the liquid-crystalline state to a smooth substrate and aligned, the LC mixture is three-dimensionally crosslinked by polymerization, and the film is detached from the substrate.

5. Process for the production of LC pigments according to Claim 3, **characterized in that** an LC film according to Claim 3 is comminuted to give platelet-shaped particles.

6. Coating compositions comprising LC pigments or LC films according to Claim 3.

## Revendications

1. Mélange de substances réticulables cristallines liquides présentant une phase chirale (mélange CL), renfermant des groupes polymérisables, au moins 90 % des groupes polymérisables faisant partie de molécules renfermant au moins deux groupes polymérisables (molécules réticulatrices), **caractérisé en ce que** des composés de formule générale Y¹-A¹-M¹-A²-Y², dans laquelle
Y¹ et Y² sont identiques ou différents et représentent des groupes polymérisables tels que, par exemple, un radical acrylate ou métacrylate, un radical époxyde, un radical isocyanate, hydroxy, éthervinylique ou estervinylique, et
A¹ et A² sont des radicaux identiques ou différents de formule générale CₙH₂ₙ, dans laquelle n représente un entier allant de 0 à 20, et un ou plusieurs groupes méthylène peuvent être remplacés par des atomes d'oxygène, et
M¹ est de formule générale -R¹-X¹-R²-X²-R³-X³-R⁴-, dans laquelle R¹, R², R³ et R⁴ représentent des radicaux bivalents identiques ou différents choisis parmi le groupe constitué de -O-, -COO-, -CONH-, -CO-, -S-, -C≡C, -CH=CH-, -N=N-, -N=N(O)-, et R²-X²-R³ ou R²-X² ou R²-X²-R³-X³ peuvent également être une liaison C-C, et X¹, X² et X³ sont des radicaux identiques ou différents choisis parmi le groupe constitué de 1,4-phénylènes, de 1,4-cyclohexylènes, d'arylènes ou d'hétéroarylènes substitués par B¹ et/ou B² et/ou B³ et ayant de 6 à 10 atomes dans le noyau arylique, lesquels renferment de 1 à 3 hétéroatomes parmi le groupe constitué de O, de N et de S, de cycloalkylènes substitués par B¹ et/ou B² et/ou B³ et ayant de 3 à 10 atomes de carbone, où B¹, B² et B³ peuvent être des substituants identiques ou différents choisis par le groupe constitué de -H, d'un alkyle en C₁-C₂₀, d'un alcoxy en C₁-C₂₀, d'un alkylthio en C₁-C₂₀, d'un C₁-C₂₀-alkylcarbonyle, d'un C₁-C₂₀-alcoxycarbonyle, d'un C₁-C₂₀-alkylthiocarbonyle, de -OH, de -F, de -Cl, de -Br, de -I, de -CN, de -NO₂, d'un formyle, d'un acétyle et de radicaux alkyle, alcoxy ou alkylthio ayant de 1 à 20 atomes de carbone, interrompus par un oxygène d'éther, un soufre de thioéther ou des groupes ester,
sont mélangés avec des composés chiraux de formule générale V¹-A¹-W¹-Z-W²-A²-V², dans laquelle
V¹ et V² sont identiques ou différents et représentent un radical acrylate ou méthacrylate, un radical époxide, un radical éther vinylique ou ester vinylique, un radical isocyanate, un alkyle en C₁-C₂₀, un alcoxy en C₁-C₂₀, un alkylthio en C₁-C₂₀, un C₁-C₂₀-alcoxycarbonyle, un C₁-C₂₀-alcylthiocarbonyle, -OH, -F, -Cl, -Br, -I, -CN, -NO₂, un formyle, un acétyle ou des radicaux alkyle, alcoxy ou alkythio ayant de 1 à 20 atomes de carbone, interrompus par un oxygène d'éther, un soufre de thioéther ou des groupes ester,
A¹ et A² ont la signification mentionnée et
W¹ et W² sont de formule générale -R¹-X¹-R²-X²-R³-, dans laquelle
R¹, R² et R³ ont la signification mentionnée et R² ou R²-X² peut également être une liaison C-C, et
X¹ et X² ont la signification mentionnée, et
Z représente un radical chiral bivalent parmi le groupe constitué de dianhydrohexitols, d'hexoses, de pentoses, de dérivés binaphtyliques, de dérivés biphényliques, de dérivés de l'acide tartrique ou de glycols optiquement actifs,
la concentration des groupes polymérisables dont au moins 90 % se trouvent sur des molécules renfermant au moins deux groupes polymérisables étant comprise entre 3,2 et 15 mmol/g dans l'ensemble du mélange.

2. Mélange selon la revendication 1, **caractérisé en ce qu'**il comprend de 70 à 99 % en poids de composés de formule générale Y¹-A¹-M¹-A²-Y² et de 1 à 30 % en poids de composés de formule générale V¹-A¹-W¹-Z-W²-A²-V².

3. Films cristallins liquides ou pigments cristallins liquides constitués de mélanges cristallins liquides selon l'invention réticulés selon l'une quelconque des revendications 1 à 2.

4. Procédé de production d'un film cristallin liquide selon la revendication 3, **caractérisé en ce qu'**un mélange CL selon l'une quelconque des revendications 1 ou 2 est appliqué à l'état cristallin liquide sur un substrat lisse et orienté, réticulé de façon tridimensionnelle par polymérisation du mélange CL et détaché du substrat.

5. Procédé de production de pigments cristallins liquides selon la revendication 3, **caractérisé en ce qu'**un film cristallin liquide selon la revendication 3 est fractionné pour donner lieu à des particules en forme de paillettes.

6. Composition de revêtement comprenant des pigments cristallins liquides ou des films cristallins liquides selon la revendication 3.
